(19) Europäisches Patentamt
European Patent Office
Office européen des brevets

(11) EP 1 337 564 B1

(12) **EUROPÄISCHE PATENTSCHRIFT**

(45) Veröffentlichungstag und Bekanntmachung des Hinweises auf die Patenterteilung:
**27.07.2005 Patentblatt 2005/30**

(21) Anmeldenummer: **01996562.3**

(22) Anmeldetag: **16.11.2001**

(51) Int Cl.7: **C08F 6/08**

(86) Internationale Anmeldenummer:
**PCT/EP2001/013269**

(87) Internationale Veröffentlichungsnummer:
**WO 2002/040553 (23.05.2002 Gazette 2002/21)**

(54) **VERFAHREN ZUR DESAKTIVIERUNG UND RÜCKGEWINNUNG VON BORTRIFLUORID BEI DER HERSTELLUNG VON POLYISOBUTENEN**

METHOD FOR DEACTIVATING AND RECOVERING BORON TRIFLUORIDE WHEN PRODUCING POLYISOBUTENES

PROCEDE POUR DESACTIVER ET RECUPERER DU TRIFLUORURE DE BORE LORS DE LA PRODUCTION DE POLYISOBUTENES

(84) Benannte Vertragsstaaten:
**AT BE CH CY DE DK ES FI FR GB GR IE IT LI LU MC NL PT SE TR**

(30) Priorität: **17.11.2000 DE 10057318**
**07.06.2001 DE 10127818**

(43) Veröffentlichungstag der Anmeldung:
**27.08.2003 Patentblatt 2003/35**

(73) Patentinhaber: **BASF AKTIENGESELLSCHAFT**
**67056 Ludwigshafen (DE)**

(72) Erfinder:
- **WETTLING, Thomas**
  **2180 Ekeren (BE)**
- **BORCHERS, Dirk**
  **2950 Kapellen (BE)**
- **VERRELST, Wim**
  **2650 Edegem (BE)**
- **RATH, Hans, Peter**
  **67269 Grünstadt (DE)**

(56) Entgegenhaltungen:
**EP-A- 0 896 967** **WO-A-99/31151**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 337 564 B1

## Beschreibung

Die vorliegende Erfindung betrifft ein Verfahren zur Desaktivierung und Rückgewinnung von Bortrifluorid bei der Herstellung von Polyisobutenen durch kationische Polymerisation von Isobuten oder isobutenhaltigen Kohlenwasserstoffströmen in der flüssigen Phase in Gegenwart von Bortrifluorid als solchem oder in Form eines Bortrifluorid-Katalysatorkomplexes, bei welchem man den Katalysatorkomplex als im Wesentlichen flüssige Phase vom Austrag aus dem Reaktor abtrennt.

Hochmolekulare Polyisobutene mit Gewichtsmitteln ($M_w$) von bis zu mehreren 100 000 Dalton sind seit langem bekannt, und ihre Herstellung wird beispielsweise in H. Güterbock: Polyisobutylen und Mischpolymerisate, Springer Verlag, Berlin 1959, S. 77 bis 104, beschrieben. Von diesen herkömmlichen Polyisobutenen sind die so-genannten hochreaktiven Polyisobutene zu unterscheiden, welche in der Regel Gewichtsmittel von 500 bis 50000 Dalton und einen hohen Gehalt an endständigen Doppelbindungen, sogenannten Vinylidengruppierungen, von vorzugsweise deutlich über 60 mol-% haben.

Solche hochreaktive Polyisobutene werden als Zwischenprodukte für die Herstellung von Additiven für Schmier- und Kraftstoffe verwendet, wie sie beispielsweise in der DE-A 27 02 604 beschrieben sind. Zur Herstellung dieser Additive werden zunächst durch Reaktion der endständigen Doppelbindungen.des Polyisobutens mit Maleinsäureanhydrid, Polyisobuten-Maleinsäureanhydrid-Addukte, insbesondere Polyisobutenyl-Bernsteinsäureanhydride erzeugt, welche anschließend mit bestimmten Aminen zum fertigen Additiv umgesetzt werden. Der Anteil an endständigen Vinylidengruppierungen im Molekül ist eines der wichtigsten Qualitätskriterien für diesen Polyisobutentypus, da bei der Adduktbildung mit Maleinsäureanhydrid hauptsächlich die endständigen Vinylidengruppierungen reagieren, wohingegen die weiter im Inneren der Makromoleküle liegenden Doppelbindungen je nach ihrer Lage im Makromolekül ohne die Zugabe von geeigneten Aktivatoren zu keinem oder zu einem deutlich geringeren Umsatz führen.

Wie man sich das Zustandekommen der endständigen Vinylidengruppierungen und die Isomerisierung der endständigen Doppelbindungen in den Isobutenmakromolekülen zu internen Doppelbindungen vorzustellen hat, kann etwa dem Artikel von Puskas et al., J. Polymer Sci.: Symposium No. 56, 191 (1976) oder der EP-A 628 575 entnommen werden. Die dabei ablaufenden Protonierungen, Deprotonierungen und Umlagerungen sind Gleichgewichtsreaktionen, bei denen die Ausbildung höher alkylsubstituierter Kationen thermodynamisch begünstigt ist. Die genannten Reaktionen werden in der Regel durch Säurespuren, insbesondere durch den üblicherweise Lewis-sauren Katalysator der Polymerisation selbst gefördert.

Ein weiteres Qualitätskriterium für Polyisobutene mit dem genannten Verwendungszweck ist deren Zahlenmittel ($M_n$). Beim Zahlenmittel handelt es sich um eine Maßzahl, die angibt, welche Molekülgröße im Produkt der Polymerisation durchschnittlich vorhanden ist. Im Allgemeinen kommen Polyisobutene mit Zahlenmitteln von 200 bis 50000, bevorzugt von 200 bis 5000, insbesondere von 500 bis 3000 und speziell von 500 bis 2500 Dalton zum Einsatz.

Auch die Molekulargewichtsverteilung (Dispersität, D) der Polyisobutenmakromoleküle ist für den genannten Zweck ein Qualitätskriterium, denn je breiter sie ist, d.h., je größer die Streuung der Molekulargewichte der Polyisobutenmakromoleküle um einen Mittelwert ist, umso weniger sind die Produkte häufig auf eine bestimmte Eigenschaft zugeschnitten.

Der Fachmann kennt bereits eine Reihe von Verfahren zur Herstellung von hochreaktiven Polyisobutenen aus Isobuten mit Zahlenmitteln und Dispersitäten, die den genannten Anforderungen genügen und bei denen man Bortrifluorid als Katalysator verwendet.

Bortrifluorid setzt man dabei überwiegend in Form von Donor-Komplexen, insbesondere mit Wasser, Alkoholen, Phenolen, Carbonsäuren, Carbonsäureanhydriden, Fluorwasserstoff, Ethern oder Gemischen dieser Verbindungen ein. Bortrifluorid ist dabei als solches oder in Form der genannten Komplexe ein selbst bei tiefen Temperaturen ausgesprochen wirksamer Katalysator (vgl. z.B. die DE-A 27 02 604, EP-A 145 235 oder EP-A 322 241).

Will man daher die durch Bortrifluorid katalysierte Polymerisation des Isobutens abbrechen, nachdem sich ein definierter Umsatz und/oder eine definierte Selektivität hinsichtlich der makromolekularen Produkte eingestellt hat, so muss man das Bortrifluorid in der Regel schnell und vollständig desaktivieren. Diese Desaktivierung kann darin bestehen, das Bortrifluorid zu zersetzen, es beispielsweise mit Natronlauge zu hydrolysieren, oder es mit stärkeren Donoren zu komplexieren, um es dem Reaktionsgeschehen zu entziehen.

Die DE-C 40 33 196 lehrt, den Reaktionsabbruch mit Ammoniak oder mit 5 bis 50 Gew.-%iger wäßriger Natronlauge vorzunehmen. Natrium- oder Ammoniumsalze, die dabei entstehen, lassen sich jedoch auch durch mehrfaches Waschen mit Wasser nicht vollständig vom Reaktionsprodukt Polyisobuten abtrennen und stören bei den oben beschriebenen Verwendungen meist noch in Mengen von weniger als 10, oft sogar von weniger als 0,1 ppm.

Gemäß der DE-A 43 06 384 kann die Desaktivierung des Bortrifluorids mit Wasser, Alkoholen, Acetonitril, Ammoniak oder wäßrigen Lösungen von Mineralbasen wie Alkalimetall- und Erdalkalimetall-Hydroxidlösungen oder mit Lösungen von Carbonaten dieser Metalle erfolgen.

Die wäßrig-hydrolytischen Verfahren zur Desaktivierung des Bortrifluorids führen durchweg zu Abwässern, die durch ihren Gehalt an anorganischem Fluorid problematisch sind. Selbstredend kann das Bortrifluorid auf diesem

Weg auch nicht mehr wirtschaftlich für eine erneute Verwendung im Verfahren zurückgewonnen werden. Da die derartigen Verfahren zur Herstellung von Polyisobutenen zumeist in der Kälte durchgeführt werden müssen, um hinreichend selektiv zu verlaufen, muss die wäßrige Hydrolyse des Reaktoraustrags normalerweise mit erwärmtem Wasser durchgeführt werden, um hinreichend schnell und vollständig zu sein und um zu vermeiden, dass sich im Austrag Eis bildet. In diesen meist kurzen Phasen des Aufwärmens können sich jedoch unerwünschte Nebenprodukte bilden, was bedeutet, dass die Selektivität der Umsetzung insgesamt sinkt. Insbesondere für industrielle Verfahren bedeutet diese Arbeitsweise aber auch, dass die zum Erreichen der niedrigen Reaktionstemperatur aufgewandte Energie teilweise verloren geht. Bei der Verwendung von Wasser entsteht praktisch immer auch eine mehr oder weniger große Menge an korrosiver Fluorwasserstoffsäure, was die Verwendung von hochwertigen und damit normalerweise teuren Materialien, insbesondere Spezialstählen, für die Konstruktion der nachgeschalteten Anlagenteile erforderlich macht.

Die Desaktivierung des Bortrifluorids mit dem nicht protischen Acetonitril (vgl. etwa die EP-A 145 235) verläuft schnell. Das toxische Acetonitril wird jedoch meist im Überschuß verwendet und ist gut wasserlöslich, so dass bei der Aufarbeitung große Mengen problematischen Abwassers entstehen.

Aus der WO-A 99/31151 ist bekannt, Bortrifluorid aus dem Reaktionsgemisch der Isobuten-Polymerisation in Form eines Isopropanol-Komplexes abzuscheiden und auf diesem Weg das Bortrifluorid wieder für die Umsetzung verfügbar zu machen. Damit diese Abscheidung gelingt, dürfen nicht mehr als 2 Gew.-% Isobuten im Reaktionsgemisch enthalten sein. Praktisch führt dieser Gehalt bei der Umsetzung von Isobuten zu Polyisobutenen mit Zahlenmitteln von mehr als 1000 jedoch zu Produkten von verminderter Reaktivität, so dass man vorzugsweise derart niedrige Isobuten-Gehalte vermeidet und unverbrauchtes Isobuten in diesen Fällen bei Reaktionsende mit beträchlichem technischem Zusatzaufwand aus dem Reaktionsgemisch entfernt.

Der vorliegenden Erfindung lag daher die Aufgabe zugrunde, ein verbessertes Verfahren zur Desaktivierung und Rückgewinnung von Bortrifluorid aus solchen Reaktionsmischungen bereitzustellen, wie sie bei der Herstellung hochreaktiver Polyisobutene aus Isobuten unter Verwendung von Bortrifluorid als Katalysator anfallen.

Demgemäß wurde ein Verfahren zur Desaktivierung und Rückgewinnung von Bortrifluorid bei der Herstellung von Polyisobutenen durch kationische Polymerisation von Isobuten oder isobutenhaltigen Kohlenwasserstoffströmen in der flüssigen Phase in Gegenwart von Bortrifluorid als solchem oder in Form eines Bortrifluorid-Katalysatorkomplexes gefunden, bei welchem man den Katalysatorkomplex als im Wesentlichen flüssige Phase vom Austrag aus dem Reaktor abtrennt, und welches dadurch gekennzeichnet ist, dass man

a) dem Austrag aus dem Polymerisationsreaktor bei -60 bis 0°C Methanol, Ethanol oder ein Gemisch aus Methanol und Ethanol in einer solchen Menge zusetzt, dass sich eine an Bortrifluorid reiche Alkohol-Phase abscheidet und

b) die Alkohol-Phase gemäß (a) abtrennt und

c) das Bortrifluorid der Alkohol-Phase gemäß (b) in geeigneter Weise gewünschtenfalls in das Verfahren zurückführt.

Besonders vorteilhaft ist bei der Durchführung des erfindungsgemäßen Verfahrens die Verwendung von Methanol.

Die erfindungsgemäß für die Desaktivierung und Rückgewinnung von Bortrifluorid eingesetzten Alkohole Methanol, Ethanol sowie deren Gemische untereinander werden hierin der Kürze halber als "Alkanole" bezeichnet.

Unter endständigen Vinylidengruppierungen oder endständigen Doppelbindungen werden hierin solche Doppelbindungen verstanden, deren Lage im Polyisobutenmakromolekül durch die allgemeine Formel I

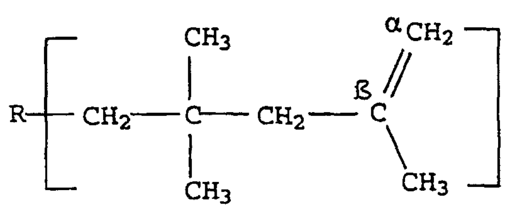

I

beschrieben wird, in welcher R für den übrigen Teil des Polyisobutylenmakromoleküls steht. Die Art und der Anteil der vorhandenen Doppelbindungen kann mit Hilfe der $^{13}C$-NMR-Spektroskopie bestimmt werden, wobei die beiden in der Formel I mit $\alpha$ und $\beta$ markierten Kohlenstoffatome der endständigen Doppelbindung im $^{13}C$-NMR-Spektrum durch ihre Signale bei der chemischen Verschiebung von 114,4 bzw. 143,6 relativ zu Tetramethylsilan identifizierbar sind. Der Anteil der endständigen Doppelbindungen bezüglich anderer Arten von Doppelbindungen wird ermittelt, indem man die Peakflächen der einzelnen Olefinsignale jeweils ins Verhältnis setzt zum Gesamtflächenintegral der Olefinsignale.

Zur Herstellung hochreaktiver Polyisobutene aus Isobuten in Gegenwart von Bortrifluorid wird normalerweise entweder die benötigte Menge an vorgebildeter Bortrifluorid-Komplex-Lösung oder - Suspension im Isobuten verteilt oder es wird alternativ der Katalysator in situ erzeugt, indem man gasförmiges Bortrifluorid in das Isobuten und den Komplexbildner für das Bortrifluorid einleitet. Das katalytisch aktive System aus Bortrifluorid und dem Komplexbildner, das auf einem der genannten Wege entsteht, wird im Folgenden als "Katalysatorsystem" bezeichnet.

Bei der Umsetzung von Isobuten zu hochreaktiven Polyisobutenen eignen sich als Komplexbildner für das Bortrifluorid Alkohole vorzugsweise sekundäre Alkohole, mit beispielsweise 1 bis 4 Kohlenstoffatomen und insbesondere, unabhängig voneinander, Isopropanol und sek.-Butanol (vgl. die EP-A 628 575). Als weiterer Komplexbildner kann diesen Katalysatorsystemen noch ein Dialkylether zugesetzt sein (vgl. die US-A 5,408,018) und insbesondere ein solcher Dialkylether, der mindestens eine tertiäre Alkylgruppe oder mindestens eine sek.-Alkylgruppe aufweist. Derartige Katalysatorsysteme sind aus der WO-A 99/64482 bekannt, die hiermit hinsichtlich der Katalysatorkomplexe vollinhaltlich in Bezug genommen wird.

Bezogen auf eingesetztes Bortrifluorid wird im Allgemeinen die gleiche, vorzugsweise die 2,5- bis 1,05-fache und insbesondere die 2- bis 1,25-fache molare Menge an derartigen Alkoholen und/oder Ethern als Komplexbildner mitverwendet.

Üblicherweise wird das Katalysatorsystem in Mengen von 0,05 bis 1 Gew.-%, bezogen auf das Gewicht des eingesetzten Isobutens verwendet. Die Bruttoreaktionsgeschwindigkeit und das Molekulargewicht sind dabei in der Regel von der eingesetzten Menge des Katalysatorsystems abhängig, vor allem aber vom Molverhältnis des eingesetzten Katalysators bezogen auf eingesetztes Isobuten.

Als Isobuten-haltiges Ausgangsmaterial (im Folgenden "Isobuten-Feedstock" genannt) können in dem der Desaktivierung des Bortrifluorids vorangehenden Syntheseschritt reines Isobuten aber auch Gemische von Isobuten mit anderen Kohlenwasserstoffen eingesetzt werden, wobei der Isobutengehalt derartiger Gemische zweckmäßigerweise nicht weniger als 5 Gew.-% betragen sollte. Vorzugsweise werden Kohlenwasserstoffgemische mit hohem Isobutengehalt und einem möglichst geringen Butadiengehalt verwendet, beispielsweise Raffinat I, ein teilhydrierter $C_4$-Strom aus einem Steamcracker, ein $C_4$-Strom aus dem Fluid Catalyst Cracking der Raffinerien oder ein $C_4$-Strom aus einer Isobutan-Dehydrierung.

Der Isobuten-Feedstock kann in Gegenwart des Katalysatorsystems in einem oder mehreren inerten Lösungsmitteln zum Polyisobuten umgesetzt werden. Geeignete Lösungsmittel, einzeln oder in Gemischen untereinander, sind gesättigte Kohlenwasserstoffe, beispielsweise n-Butan, n-Pentan, n-Hexan, Isooctan oder Cyclohexan, halogenierte Kohlenwasserstoffe wie Methylenchlorid, Chloroform und sonstige Kohlenstoffhalogenverbindungen mit geeigneten Schmelz- und Siedepunkten. Verwendet man als Isobuten-Feedstock isobutenhaltige Kohlenwasserstoffströme, so können die darin enthaltenen Kohlenwasserstoffe, welche unter den Reaktionsbedingungen inert sind, die Funktion des Lösungsmittels übernehmen.

Der Isobuten-Feedstock kann geringe Mengen an Verunreinigungen wie Wasser, Acetaldehyd, Aceton, Acetonitril, Carbonsäuren oder Mineralsäuren enthalten, ohne dass es deswegen bei der Polymerisation zu kritischen Einbußen bei Ausbeute oder Selektivität kommt. Es ist aber zweckdienlich, eine Anreicherung dieser Verunreinigungen im Reaktor zu vermeiden, indem man sie zuvor beispielsweise mittels Adsorption an feste Adsorbentien wie Aktivkohle, Molekularsiebe oder Ionenaustauscher aus dem Isobuten-Feedstock entfernt.

Die Polymerisation des Isobutens kann diskontinuierlich, halbkontinuierlich oder kontinuierlich durchgeführt werden. Dazu kann in an sich bekannten Reaktoren wie Rohrreaktoren, Rohrbündelreaktoren oder Rührkesseln gearbeitet werden. Vorzugsweise wird das Herstellverfahren in einem Schlaufenreaktor, also einem Rohr- oder Rohrbündelreaktor mit Stetigem Umlauf des Reaktionsguts, durchgeführt, wobei in der Regel das Volumenverhältnis von Zulauf zu Umlauf zwischen 1 : 1 und 1 : 1000, vorzugsweise zwischen 1 : 30 und 1 : 200 variieren kann. Es versteht sich von selbst, dass dabei die Zulaufmenge der Einsatzstoffe zum Reaktor der Menge des Reaktionsaustrages entspricht, sobald die Polymerisationsreaktion einen Gleichgewichtszustand erreicht hat.

Es ist zweckmäßig, sowohl beim Einleiten von vorgeformten Katalysatorkomplexen in den Reaktor als auch bei deren in situ-Darstellung im Reaktor für eine gute Durchmischung aller Reaktionspartner zu sorgen, denn hohe lokale und stationäre Katalysatorkonzentrationen im Reaktor können Anlaß zu unerwünschten Doppelbindungsverschiebungen in den polymeren Produkten geben. Eine gute Durchmischung erreicht man beispielsweise durch geeignete Einbauten wie Umlenkbleche oder durch angepasste Rohrquerschnitte, die bei geeigneter Strömungsgeschwindigkeit zu einer wirksamen, zweckdienlichen turbulenten Strömung des Reaktionsgutes im Reaktor führen.

Die Verweilzeit des Isobutens im Reaktor kann 5 Sekunden bis mehrere Stunden betragen. Vorzugsweise wird eine Verweilzeit von 1 bis 30 und besonders bevorzugt von 2 bis 20 Minuten gewählt.

Die Polymerisation wird zumeist bei Temperaturen unterhalb 0°C durchgeführt. Obwohl Isobuten noch bei wesentlich tieferen Temperaturen erfolgreich mittels des Katalysatorsystems zu hochreaktivem Polyisobuten polymerisiert werden kann, wird vorzugsweise bei Temperaturen zwischen 0 und -60, insbesondere zwischen 0 und -30 und besonders bevorzugt zwischen -5 und -25°C gearbeitet.

Vorteilhafterweise wird die Polymerisationsreaktion unter isothermen Bedingungen und im Falle einer kontinuierlichen Reaktionsführung, unter Einstellung einer konstanten, stationären Isobutenkonzentration im Reaktionsmedium betrieben. Die stationäre Isobutenkonzentration kann im Prinzip beliebig gewählt werden. Zweckmäßigerweise wird in der Regel eine Isobutenkonzentration von 0,2 bis 50 und vorzugsweise von 0,2 bis 10 Gew.-%, bezogen auf die gesamte Polymerisationsmischung, eingestellt.

Im Allgemeinen wird die Polymerisation unter Atmosphärendruck oder einem gegenüber dem Atmosphärendruck leicht erhöhten Druck ausgeführt. Die Anwendung eines erhöhten Drucks, insbesondere das Arbeiten unter dem Eigendruck des Reaktionssystems, kann unter verfahrenstechnischen Gesichtspunkten im Hinblick auf den Betrieb der Umlaufpumpe und nachfolgende Verfahrensstufen vorteilhaft sein, sie ist jedoch für das Resultat der Polymerisation in der Regel nicht zwingend erforderlich.

Da die Polymerisationsreaktion exotherm verläuft, wird die entstandene Wärme in der Regel mit Hilfe einer Kühlvorrichtung, die beispielsweise mit flüssigem Ammoniak als Kühlmittel betrieben werden kann, abgeführt. Eine andere Möglichkeit der Wärmeabfuhr ist die Siedekühlung, bei der freiwerdende Wärme durch Verdampfen des Isobutens, anderer leicht flüchtiger Bestandteile des Isobuten-Feedstocks und/oder des gegebenenfalls leichtflüchtigen Lösungsmittels, welches Ethan, Propan oder Butan sein kann, entzogen wird, wodurch die Temperatur konstant bleibt.

Der Isobutenumsatz kann prinzipiell beliebig eingestellt werden. Es versteht sich aber von selbst, dass die Wirtschaftlichkeit des Verfahrens bei sehr niedrigen Isobutenumsätzen in Frage gestellt ist, wohingegen bei sehr hohen Isobutenumsätzen von mehr als 99 % die Gefahr von unerwünschten Nebenreaktionen, beispielsweise von Doppelbindungsverschiebungen und vor allem der Bildung unerwünschter Oligomere, immer größer wird. In der Regel liegt der Isobutenumsatz aus diesen Gründen zwischen 20 und 99,5 und vorzugsweise zwischen 90 und 99 %. Will man Polyisobutene mit hohen Molmassen erzielen, so hält man den Umsatz an Isobuten in der Regel niedrig, was meist zu einem hohen Gehalt an unverbrauchtem Isobuten im Reaktionsgemisch führt.

Im Austrag aus dem Reaktor (im Folgenden kurz "Austrag" genannt) liegt in der Regel der größte Teil des eingesetzten Bortrifluorids in freier Form oder als Komplex mit dem ursprünglich zugesetzten Komplexbildner vor. Es ist jedoch nicht auszuschließen, dass eine Umsetzung des Bortrifluorids mit anderen Bestandteilen des Reaktionsgemischs stattgefunden hat, etwa, bei Verwendung von Isopropanol als Komplexbildner, zu einem Boran. Wegen des normalerweise geringen Ausmaßes solcher Nebenreaktionen sollen diese jedoch hierin nicht weiter in Betracht gezogen werden, zumal die mit protischen Verbindungen gebildeten Borane in der organischen Phase sehr gut löslich sind und bei der wäßrigen Wäsche des Polyisobutens weitestgehend vernichtet werden. Vielmehr soll der Einfachheit halber und in guter Annäherung an die tatsächlichen Gegebenheiten davon ausgegangen werden, dass das gesamte eingesetzte Bortrifluorid zum Zeitpunkt der erfindungsgemäßen Desaktivierung noch als solches intakt ist.

Die Desaktivierung und Rückgewinnung des Bortrifluorids kann grundsätzlich diskontinuierlich, halbkontinuierlich oder kontinuierlich durchgeführt werden. Vorzugsweise wird die Deaktivierung und Abtrennung bei -30 bis 0 und insbesondere bei -25 bis -5°C durchgeführt. Wird die Polymerisation des Isobutens mit Bortrifluorid kontinuierlich durchgeführt, so wird das Bortrifluorid im Austrag vorzugsweise kontinuierlich mit den Alkanolen desaktiviert.

Die Alkanole können auch mit einem oder mehreren weiteren, unter den Reaktionsbedingungen inerten und vor allem unpolaren Lösungsmitteln wie Kohlenwasserstoffen oder halogenierten Kohlenwasserstoffen, vorzugsweise solchen mit einem Siedepunkt unter 100°C, z.B. n-Pentan, n-Hexan, Dichlormethan, vor der Desaktivierung verdünnt werden. Derartige Lösungsmittel können dem Austrag auch unmittelbar als solche während der Desaktivierung zugefügt werden. In den Gemischen mit den inerten Lösungsmitteln liegen die Alkanole im Allgemeinen zu 5 bis 100 und vorzugsweise zu mehr als 20 Gew.-% vor.

Man setzt die Alkanole im molaren Verhältnis 1 : 1 bis 20 : 1, vor allem 2 : 1 bis 15 : 1 und insbesondere 2 : 1 bis 10 : 1, bezogen auf das im Austrag vorliegende Bortrifluorid, ein. Aus wirtschaftlichen Überlegungen heraus wird man möglichst nur einen geringen Überschuß der Alkanole verwenden, jedoch verläuft die Desaktivierung in der Regel umso schneller und vollständiger, je größer deren Überschuß ist oder je besser die Durchmischung ist. Da eine schnelle und vollständige Desaktivierung des Bortrifluorids eine wichtige Voraussetzung dafür ist, dass sich die bei der Polymerisation im Reaktor erreichte Produktzusammensetzung bis zum Ende der Aufarbeitung nicht mehr wesentlich ändert, kann die Verwendung eines größeren Überschusses an Alkanolen angeraten sein.

Zum Zwecke der Desaktivierung des Bortrifluorids werden die Alkanole in den Austrag eingetragen und kräftig mit diesem vermischt, oder sie werden vorgelegt und der Austrag wird ihnen unter kräftigem Durchmischen zugefügt.

Der dabei entstehende Bortrifluoridkomplex ist im Reaktionsmedium in der Regel schlecht löslich und bildet bei der Temperatur der Desaktivierung normalerweise eine zweite Phase, die in einfacher Weise abgetrennt werden kann und deren Gehalt an Bortrifluorid im Allgemeinen größer ist als 10, vorzugsweise 20 und vor allem 25 Gew.-%. Eine solche Abscheidung tritt überraschenderweise auch bei hohen Restgehalten an Isobuten im Austrag von insbesondere mehr als 2 Gew.-% auf, beispielsweise bei der Herstellung von Polyisobutenen mit $M_n$ zwischen 1000 und 5000 Dalton.

In einer weiteren Ausführungsform des erfindungsgemäßen Verfahrens kann dem Austrag zur Desaktivierung des Bortrifluorids zusätzlich zum Alkanol Wasser zugesetzt werden. Der Anteil an Wasser, bezogen auf die Alkanole sowie gegebenenfalls deren Gemische mit Lösungsmitteln beträgt bis zu 70, vorzugsweise bis zu 60 und insbesondere

zwischen 5 und 50 Gew.-%. Vorzugsweise setzt man das Wasser erst zu, nachdem man zunächst die Alkanole auf das Bortrifluorid im Austrag hat einwirken lassen und nachdem man das so erhaltene Gemisch - etwa mittels eines Wärmetauschers zur Rückgewinnung der Kälteenergie - auf eine Temperatur oberhalb jener Temperatur eingestellt hat, bei der das Wasser in der Mischung ausfrieren würde. Diese Temperatur liegt in der Regel oberhalb von 0°C.

In einer weiteren Ausführungsform werden dem Austrag Alkanol und Wasser gemeinsam zugesetzt.

Bevorzugt verwendet man bei der Desaktivierung des Bortrifluorids Vorrichtungen, die ein schnelles und vollständiges Durchmischen gewährleisten. So kommen beispielsweise Rührkessel und vorzugsweise statische Mischer zum Einsatz. Da sich aus Bortrifluorid in Gegenwart vor allem von Wasser Fluorwasserstoff bilden kann, ist gegebenenfalls der Kontakt der Reaktionsmischung mit Materialien, die gegen Fluorwasserstoff unbeständig sind, wie Glas oder Email, möglichst zu vermeiden.

Die Desaktivierung des Bortrifluorids wird vorzugsweise bei der Temperatur der Polymerisation, vor allem bei 0 bis -30 und insbesondere bei 0 bis -25°C durchgeführt. Eine Desaktivierung bei einer anderen als der Reaktionstemperatur ist ebenfalls möglich; während der dafür erforderlichen Temperaturerhöhung oder -erniedrigung kann sich jedoch in der oben beschriebenen Weise das Reaktionsprodukt in unerwünschter Weise verändern.

Nachdem die gesamten Mengen des Austrags, des Alkanols oder gegebenenfalls eines Alkanol-Wassers-Gemisches vereinigt worden sind, hält man die erhaltene Mischung normalerweise noch zwischen 10 Sekunden und 20 Minuten mit geeigneten Vorrichtungen, z.B. mit üblichen mechanischen Rührern, und insbesondere mittels turbulenter Strömung in intensiver Durchmischung.

Von besonderem Vorteil für die weitere Aufarbeitung der so erhaltenen Mischung ist die Ausbildung von vor allem zwei Phasen, von denen die eine die Hauptmenge des desaktivierten Bortrifluorids ("Bortrifluorid-Alkanol-Phase") und die andere die Hauptmenge des Polyisobutens ("organische Phase") enthält.

Eine derartige Phasentrennung kann in bestimmten Situationen, beispielsweise bei sehr hohen Restgehalten an Isobuten im Austrag in der Regel deutlich weiter verbessert werden, wenn man den Austrag mit Wasser versetzt. Welche Menge an Wasser dabei im Einzelnen konkret zuzusetzen ist, kann der Fachmann leicht anhand einiger Handversuche ermitteln.

Die organische Phase umfasst neben der Hauptmenge des Polyisobutens weiterhin normalerweise das unumgesetzte Isobuten, niedermolekulare Polymere des Isobutens, insbesondere mit Zahlenmitteln unterhalb von 300 Dalton, und gegebenenfalls das Lösungsmittel.

Aus der organischen Phase lassen sich geringe Restmengen Bortrifluorid gewünschtenfalls noch durch Extraktion, etwa mit Methanol, oder vorzugsweise durch Waschen mit Wasser entfernen.

Im weiteren Gang der Aufarbeitung wird die organische Phase zweckmäßigerweise destillativ in nicht umgesetztes Isobuten, gegebenenfalls das Lösungsmittel, die niedermolekularen Polymere des Isobutens und das Wertprodukt Polyisobuten aufgetrennt. Das Isobuten, das Lösungsmittel und die niedermolekularen Polymere können unabhängig voneinander oder zusammen in die Polymerisation zurückgeführt werden. Das gewünschte Polyisobuten zieht man in der Regel als Sumpfprodukt aus der Destillationskolonne oder einem Entgasungsbehälter ab.

Die Bortrifluorid-Alkanol-Phase kann als solche in den Reaktor zurückgeführt werden. Dabei ist zu beachten, dass keine unerwünschte Verdünnung bzw. Viskositätssenkung des Reaktorinhaltes durch das Alkanol eintritt. Außerdem ist zu berücksichtigen, dass Methanol und Ethanol an die Stelle des Alkohols treten können, welcher Bestandteil des Katalysatorsystems ist. Vorzugsweise führt man an der Bortrifluorid-Alkanol-Phase vor deren Rückführung in das Verfahren in der Regel daher zunächst entsprechende Aufkonzentrierungsoperationen und gewünschtenfalls Reinigungsoperationen durch.

Die Aufkonzentrierung des Bortrifluorids in der erfindungsgemäß abgeschiedenen Phase kann dabei auf verschiedene Weisen erfolgen. So lassen sich aus der erfindungsgemäß abgeschiedenen Bortrifluorid-haltigen Phase mittels einfacher Destillation organische Bestandteile, z.B. überschüssige Alkanole, abdestillieren. Das Bortrifluorid verbleibt dabei zunächst im Sumpf und lässt sich beispielsweise bei der Verwendung von Methanol als Alkanol auf mehr als 50 Gew.-% anreichern.

Alternativ kann der Bortrifluorid-Alkanol-Komplex etwa durch Ausfrieren isoliert werden. $BF_3 \cdot 2$ MeOH hat beispielsweise einen Festpunkt von -20°C.

Bei einer anderen Art der Aufarbeitung der Bortrifluorid-Alkanol-Phase wird dieser zunächst Wasser zugefügt, und anschliessend werden mittels Destillation oder Dampfstripppung die organischen Bestandteile wie Methanol, Ethanol, gegebenenfalls das Lösungsmittel sowie organische Bestandteile des ursprünglich eingesetzten Katalysatorkomplexes und eventuell überschüssiges Wasser entfernt. Auf diese Weise lässt sich im Rückstand eine Bortrifluorid-Konzentration von über 50 Gew.-% erzielen. Die so erhaltene Bortrifluorid-Wasser-Phase ist normalerweise nahezu frei von organischen Bestandteilen und thermisch vergleichsweise stabil, was von Vorteil ist für deren Lagerung und Transport. Aus ihr kann daher in sehr einfacher und dem Fachmann an sich bekannter Weise etwa mit Hilfe von Oleum gasförmiges Bortrifluorid von sehr hoher Reinheit freigesetzt werden.

Es wurde weiterhin gefunden, dass die Anwesenheit von Methyl-tert.-butylether (im Folgenden kurz "MTBE" genannt) bzw. bei Verwendung von Ethanol auch von Ethyl-tert.-butylether im Reaktionsgemisch der Bortrifluorid-katalysierten Herstellung von Polyisobutenen zu einer verbesserten Selektivität hinsichtlich der Endständigkeit der hergestellten Polyisobutene führt. In der Regel lässt sich die Endständigkeit auf diese Weise um bis zu 10 % verbessern. Die Menge an diesen Ethern im Reaktionsgemisch beträgt dazu im Allgemeinen 20 bis 5000, vorzugsweise 30 bis 3000 und insbesondere 40 bis 2000 ppm (bezogen auf das Gesamtgewicht der Reaktionsmischung). Sofern sich ein solcher Ether auch im Reaktionsgemisch bilden kann, ist es zweckmäßig, seine Anfangskonzentration in der Reaktionszone, welche sich praktisch aus seiner zugeführten Menge ableiten lässt, und seine Konzentration im Austrag zu betrachten.

Bei der Verwendung von Methanol als Alkanol im Sinne der vorliegenden Erfindung kann sich MTBE unter bestimmten Umständen im Reaktionsgemisch beim Abbruch oder bei erhöhten Temperaturen im Wärmetauscher bilden. Die durchgeführten Untersuchungen haben gezeigt, dass die im Herstellverfahren für die Polyisobutene gebildete Menge an MTBE bei ansonsten praktisch vergleichbaren Reaktionsbedingungen eng mit dem Molverhältnis Methanol : Bortrifluorid korreliert. So findet bei einem Molverhältnis von 0,3 : 1 bis 20 : 1 und insbesondere von 15 : 1 bis 1 : 1 parallel zur Desaktivierung des Katalysatorkomplexes eine MTBE-Bildung statt, wobei beobachtet wurde, dass mit zunehmender Methanol-Menge die in der Zeiteinheit gebildete MTBE-Menge abnimmt.

Es wurde auch gefunden, dass die Bildung des MTBE in einer Reaktionsmischung, in welcher allgemein gesprochen tert.-Butylkationen und Methanol intermediär entstehen und/oder vorliegen, auch durch die Wahl des Lösungsmittels, der Reaktionstemperatur, der Verweilzeit des Reaktionsgemischs in der Reaktionszone und der dortigen Konzentration des Isobutens gesteuert werden kann. Hieraus ergibt sich, dass der Fachmann routinemäßig die jeweils gewünschte Menge an MTBE leicht durch entsprechende Anpassung der Zusammensetzung des Reaktionsgemisches, der Verfahrensführung und der verwendeten Vorrichtungen - selbstverständlich im Rahmen der Bedingungen des Polymerisationsverfahrens für Isobuten - herstellen kann.

Bei der Aufarbeitung des Austrages führt man MTBE beziehungsweise Ethyl-tert.-butylether dann in an sich bekannter Weise, etwa zusammen mit dem Katalysatorkomplex oder zusammen mit dem destillativ abgetrennten und wiederverwendbaren Bestandteilen der Reaktionsmischung wie Isobuten oder dem Lösungsmittel, in der gewünschten Menge in das Verfahren zurück.

Mit dem erfindungsgemäßen Verfahren lassen sich die gewünschten Polyisobutene in höheren Ausbeuten und höheren Vinylidengehalten herstellen als nach herkömmlichen Verfahren dieses Typs.

Weil bei der erfindungsgemäßen Arbeitsweise die Hydrolyse des Bortrifluorids zu Fluorwasserstoffsäure und Derivaten der Borsäure keine nennenswerte Rolle spielt, kommt es nur in geringem Maße zur Korrosion an Anlagenteilen.

Beispiele

Die Zahlenmittel ($M_n$) der gemäß den Beispielen hergestellten Polymeren werden mittels Gelpermeationschromatographie bestimmt, wobei Polyisobutene mit definierten bekannten Werten $M_n$ zur Eichung verwendet werden. Aus den erhaltenen Chromatogrammen wird $M_n$ nach der Gleichung

$$M_n = \frac{\Sigma\, C_i}{\Sigma \frac{C_i}{M_i}}$$

berechnet, in der $C_i$ für die Konzentration jeweils einer einzelnen Polymerspecies i im erhaltenen Polymergemisch steht und in der $M_i$ das Molekulargewicht dieser einzelnen Polymerspecies i bedeutet.

Die Dispersität D wird aus dem Verhältnis von Gewichtsmittel ($M_w$) und Zahlenmittel nach der Gleichung

$$D = \frac{M_w}{M_n}$$

errechnet.

Das hierfür benötigte Gewichtsmittel $M_w$ wird aus den erhaltenen Chromatogrammen mit Hilfe der Formel

$$M_W = \frac{\Sigma\, CiMi}{\Sigma\, C_i}$$

erhalten.

Der Gehalt an endständigen Vinylidengruppierungen wird mit Hilfe der $^{13}C$-NMR-Spektroskopie bestimmt, wobei als Lösungsmittel deuteriertes Chloroform und als Standard Tetramethylsilan verwendet wird.

Beispiel 1: Herstellung von hochreaktivem Polyisobuten

Zur Herstellung eines Polyisobutens wird gemäß der EP-A 628 575, Beispiel 1, verfahren: Der eingesetzte Isobuten-Feedstock ist ein $C_4$-Schnitt folgender Zusammensetzung:

| | |
|---|---|
| Isobutan | 4,0 Gew.-% |
| n-Butan | 9,2 Gew.-% |
| 1-Buten | 29,0 Gew.-% |
| trans-2-Buten | 7,7 Gew.-% |
| cis-2-Buten | 4,5 Gew.-% |
| Isobuten | 45,4 Gew.-% |
| Butadien | <50 ppm |
| Wasser | ca. 2 ppm |

Im Verlauf von einer Stunde wird 6000 g des obigen $C_4$-Schnittes auf der Saugseite eines Schlaufenreaktors zugeführt, der mit einer integrierten Umwälzpumpe ausgestattet ist, dessen Rohrdurchmesser innen 4 mm und dessen Volumen 1000 ml beträgt. Bezogen auf das Bortrifluorid wird die 1,6-fache molare Menge 2-Butanol zugesetzt. Der Reaktor wird so gekühlt, dass die Temperatur im Reaktionsmedium -17°C beträgt. Die mittlere Verweilzeit des Reaktionsmediums im Reaktor liegt bei 6,6 Minuten. Proben des Reaktorinhalts werden über eine Entnahmevorrichtung, die 2 cm vor der Zuführung für die Ausgangsstoffe liegt, entnommen.

Beispiele 2 bis 8: Kontinuierliche Desaktivierung und Abtrennung des Bortrifluorids

Methanol wird in einem verschließbaren, druckstabilen Probenahmeglas vorgelegt, und eine Probe gemäß Beispiel 1 von 70 ml innerhalb weniger Sekunden bei -17°C unter intensivem Durchmischen zugefügt. Die Mischung wird unter Rühren mittels eines Magnetrührers in dem geschlossenen Probenahmeglas innerhalb von 30 Minuten von -17 auf 20°C erwärmt. Anschließend wird der Rührer abgeschaltet, worauf Tröpfchen einer zweiten Phase sichtbar werden. Die Hauptmenge des Bortrifluorids liegt in den Tröpfchen (als untere Phase) vor, welche abgetrennt werden. Danach wird die verbliebene organische Phase unter Rühren 60 Minuten lang mit 167 g Wasser durchmischt. Nach dem Abtrennen der wäßrigen Phase wird das Lösungsmittel abdestilliert, und am Rückstand der Destillation werden die in Tabelle 1 zusammengestellten analytischen Daten ermittelt.

Tabelle 1:

| Weitere Daten zu den Beispielen 2 bis 8 | | | | | | | | | |
|---|---|---|---|---|---|---|---|---|---|
| **Nr.** | **$BF_3$ [mmol/l]** | **Methanol** | | **Wasser [g]*** | **U [%]** | **A [%]** | **Vin [%]** | **$M_n$** | **D** |
| | | **Menge [g]** | **Menge [mmol]** | | | | | | |
| 2 | 7,1 | 1 | 31 | - | 94 | 93 | 85,6 | 2831 | 1,741 |
| 3 | 7,1 | 0,2 | 6,3 | - | 95 | 93 | 85,4 | 2844 | 1,788 |
| 4 | 7,1 | 0,1 | 3,1 | - | 94 | 93 | 86,0 | 2849 | 1,788 |
| 5 | 7,1 | 0,05 | 1,6 | - | 94 | 93 | 85,6 | 2855 | 1,793 |
| 6 | 7,1 | 0,02 | 0,6 | - | 94 | 93 | 85,2 | 2773 | 1,835 |
| 7 | 7,1 | 0,5 | 15,6 | 0,5 | 94 | 93 | 85,2 | 2793 | 1,729 |
| 8 | 7,1 | 0,3 | 9,4 | 0,7 | 94 | 93 | 85,4 | 2777 | 1,802 |

*Die Zugabe von Wasser erfolgt gleichzeitig mit dem Methanol

Es bedeuten in Tabelle 1:

| | |
|---|---|
| $BF_3$ | "Gehalt an $BF_3$ in der Probe": Es wird die für die Umsetzung zugesetzte $BF_3$-Menge zugrunde gelegt (s.o.) |
| U | Umsatz in Prozent, bezogen auf eingesetztes Isobuten |
| A | Ausbeute an Polyisobuten, bezogen auf eingesetztes Isobuten |
| Vin | Anteil Polyisobuten mit Vinylidendoppelbindungen an der Polyisobuten-Gesamtausbeute |
| $M_n$ | Zahlenmittel (ermittelt durch Gelpermeationschromatographie) |
| D | Dispersität |

Beispiele 9 bis 13: Kontinuierliche Desaktivierung und Abtrennung des Bortrifluorids

Gemäß Beispiel 1 wird ein Isobuten-Feedstock folgender Zusammensetzung polymerisiert:

| | |
|---|---|
| Isobutan, n-Butan, 1-Buten, trans-2-Buten und cis-2-Buten zusammen | <1 Gew.-% |
| 1-Buten | <1 Gew.-% |
| trans-2-Buten | <1 Gew.-% |
| cis-2-Buten | <1 Gew.-% |
| Isobuten | 45 Gew.-% |
| Butadien | <50 ppm |
| Wasser | ca. 2 ppm |
| n-Hexan | Rest zu 100 Gew.-%. |

Jedoch wird im Unterschied zu Beispiel 1 bezogen auf das Bortrifluorid die 1,6-fache molare Menge 2-Propanol zugesetzt, und der Reaktor wird so gekühlt, dass die Temperatur im Reaktionsmedium -19°C beträgt. Der Reaktoraustrag wird durch ein auf -18°C gekühltes Rohr geleitet, in das mittels einer statischen Mischeinrichtung (Düse) kontinuierlich Methanol zugegeben wird. Eine Temperaturerhöhung wird nicht beobachtet. In einem nachgeschalteten, auf -17°C gekühlten Verweilzeitbehälter vom Volumen 400 ml trennt sich der so behandelte Reaktoraustrag in zwei Phasen, deren untere den überwiegenden Teil des Bortrifluorid enthält. Diese untere Phase wird abgetrennt und der Gehalt an Bortrifluorid ("Bortrifluorid-Wiederfindung") ermittelt. Er liegt in den einzelnen auf Raumtemperatur gebrachten Proben zwischen 43 und 73 Gew.-%. Weitere Daten zu den Versuchen 9 bis 13 können der folgenden Tabelle 2 entnommen werden.

Tabelle 2: Weitere Daten zu den Beispielen 9 bis 13

| Nr. | $BF_3$ [mmol/h] | $BF_3$ [g/h] | Methanol | | $BF_3$-Wiederfindung in der unteren Phase [g/h] ([% der eingesetzten Menge]) | Gehalt an MTBE im Austrag [ppm des Gesamtgewichtes des Austrages] | U [%] | A [%] | Vin [%] | $M_n$ | D |
|---|---|---|---|---|---|---|---|---|---|---|---|
| | | | Menge [g/l] | Menge [mmol/l] | | | | | | | |
| 9 | 53,3 | 3,61 | 20 | 625 | 2,64 (73) | <20 | 95 | 94 | 80,7 | 2675 | 1,715 |
| 10 | 53,3 | 3,61 | 10 | 313 | 2,56 (71) | <20 | 95 | 94 | 81,3 | 2651 | 1,729 |
| 11 | 53,3 | 3,61 | 7,5 | 234 | 2,64 (73) | 27 | 95 | 94 | 83,9 | 2649 | 1,738 |
| 12 | 53,3 | 3,61 | 5 | 156 | 2,31 (64) | 97 | 95 | 93 | 87,3 | 2655 | 1,793 |
| 13 | 53,3 | 3,61 | 2,5 | 78 | 1,55 (43) | 183 | 95 | 93 | 89,7 | 2473 | 1,835 |

Zur Bedeutungen der verwendeten Abkürzungen vergleiche Tabelle 1

Beispiel 14: Rückführung der unteren Phase aus Beispiel 11 in den Reaktor

Die Versuchsdurchführung von Beispiel 11 wird derart abgeändert, dass pro Stunde 3 g von im gleichen Zeitraum abgetrennten 8,7 g der unteren, Bortrifluorid-reichen Phase (Gehalt von 33 Gew.-% an Bortrifluorid) kontinuierlich in den Reaktor zurückgeführt werden. Die Zugabemenge an frischem Bortrifluorid wird hingegen von 53,3 auf 38,6 mmol/h, d.h. um 1 g/h, gesenkt. Das Molverhältnis 2-Propanol : $BF_3$ im Reaktor wird außerdem auf 0,5 eingestellt. Die Umsetzung und das dabei erhaltene Polyisobuten sind charakterisiert durch:

| | |
|---|---|
| U | 96% |
| A | 94% |
| Vin | 86,9% |
| $M_n$ | 1987 |
| D | 1,698 |

(Die Abkürzungen sind bei Tabelle 1 erläutert.)

Beispiel 15: Destillative Aufarbeitung der unteren Phase von Beispiel 11

50 ml der gemäss Beispiel 11 erhaltenen unteren Phase (Gehalt von 33 Gew.-% an Bortrifluorid) werden in eine Destillationsapparatur gefüllt, die aus einem 100 ml-Dreihalskolben mit wassergekühlter Destillationsbrücke besteht, welcher mit Thermometer und Rührer versehen ist. Der Kolben wird von außen mittels eines Heizpilzes beheizt. Der Kolbeninhalt beginnt bei 62°C unter Normaldruck zu sieden. Der Siedepunkt des übergehenden Destillates erhöht sich kontinuierlich bis auf 105°C. Oberhalb von 105°C setzt eine leichte Nebelbildung ein. Die Destillation wird daraufhin beendet. Die Analyse ergibt für die 28 ml (22,1 g) Destillat einen Gehalt an Bortrifluorid von 1,4 Gew.-%; der Rückstand (22 ml, 27,0 g) hat einen Gehalt an Bortrifluorid von 59,4 Gew.-%.

Beispiel 16: Destillative Aufarbeitung der unteren Phase von Beispiel 11 unter Wasserzusatz

Die Destillation gemäß Beispiel 15 wird wiederholt, jedoch werden dem Reaktoraustrag zuvor 15 ml Wasser zugetropft, wobei sich der Inhalt des Destillationskolbens erwärmt. Der Kolbeninhalt beginnt bei 62°C unter Normaldruck zu sieden. Der Siedepunkt des übergehenden Destillates erhöht sich kontinuierlich bis auf 118°C. Oberhalb von 118°C setzt eine leichte Nebelbildung ein. Die Destillation wird daraufhin beendet. Die Analyse ergibt für die 40 ml (34,8 g) Destillat einen Gehalt an Bortrifluorid von 1,9 Gew.-%; der Rückstand (23 ml, 29,3 g) hat einen Gehalt an Bortrifluorid von 60,3 Gew.-% und an organischem Kohlenstoff (TOC) von 237 Gew.-ppm.

## Patentansprüche

1. Verfahren zur Desaktivierung und Rückgewinnung von Bortrifluorid bei der Herstellung von Polyisobutenen durch kationische Polymerisation von Isobuten oder isobutenhaltigen Kohlenwasserstoffströmen in der flüssigen Phase in Gegenwart von Bortrifluorid als solchem oder in Form eines Bortrifluorid-Katalysatorkomplexes, wobei man den Katalysatorkomplex als im Wesentlichen flüssige Phase vom Austrag aus dem Reaktor abtrennt, **dadurch gekennzeichnet, dass** man

   a) dem Austrag aus dem Polymerisationsreaktor bei -60 bis 0°C Methanol, Ethanol oder ein Gemisch aus Methanol und Ethanol in einer solchen Menge zusetzt, dass sich eine an Bortrifluorid reiche Alkohol-Phase abscheidet und

   b) die Alkohol-Phase gemäß (a) abtrennt und

   c) das Bortrifluorid der Alkohol-Phase gemäß (b) in geeigneter Weise gewünschtenfalls in das Verfahren zurückführt.

2. Verfahren nach Anspruch 1, **dadurch gekennzeichnet, dass** man im Verfahrensschritt (a) Methanol verwendet.

3. Verfahren nach Anspruch 1 oder 2, **dadurch gekennzeichnet, dass** man die Abscheidung der an Bortrifluorid reichen Alkohol-Phase in Verfahrensschritt (a) gemäß Anspruch 1 durch Zugabe von Wasser zum Austrag aus

dem Polymerisationsreaktor unterstützt.

**4.** Verfahren nach den Ansprüchen 1 bis 3 zur Herstellung von hochreaktivem Polyisobuten mit 80 bis 100 mol-% endständiger Doppelbindungen.

**5.** Verfahren nach Anspruch 1 bis 4 zur Herstellung von hochreaktiven Polyisobutenen mit Zahlenmitteln $M_n$ von 200 bis 50000 Dalton.

**6.** Verfahren nach den Ansprüchen 1 bis 5, **dadurch gekennzeichnet, dass** man für die kationische Polymerisation ein Katalysatorsystem einsetzt, das Isopropanol enthält.

**7.** Verfahren nach den Ansprüchen 1 bis 6, **dadurch gekennzeichnet, dass** man für die kationische Polymerisation ein Katalysatorsystem einsetzt, das Methanol enthält.

**8.** Verfahren nach Anspruch 6 oder 7, **dadurch gekennzeichnet, dass** man ein Katalysatorsystem einsetzt, dass weiterhin einen Dialkylether mit mindestens einer sekundären Alkylgruppe enthält.

**9.** Verfahren nach den Ansprüchen 1 bis 8, **dadurch gekennzeichnet, dass** man die Desaktivierung und Rückgewinnung des Bortrifluorids kontinuierlich durchführt.

**10.** Verfahren nach den Ansprüchen 1 bis 9, **dadurch gekennzeichnet, dass** man die Polymerisation des Isobutens in Gegenwart von 20 bis 5000 ppm Methyl-tert.-butylether, bezogen auf das Gewicht der Reaktionsmischung, durchführt.

**11.** Verfahren nach Anspruch 10, bei dem der Methyl-tert.-butylether zumindest teilweise im Verfahren gebildet wird.

**12.** Verfahren nach den Ansprüchen 10 oder 11, **dadurch gekennzeichnet, dass** man den im Austrag enthaltenen Methyl-tert.-butylether vom Austrag abtrennt und teilweise oder vollständig in das Verfahren zurückführt.

## Claims

**1.** A process for deactivating and recovering boron trifluoride in the preparation of polyisobutenes by cationic polymerization of isobutene or isobutene-containing hydrocarbon streams in the liquid phase in the presence of boron trifluoride as such or in the form of a boron trifluoride catalyst complex, the catalyst complex being separated as a substantially liquid phase from the discharge from the reactor, wherein

a) methanol, ethanol or a mixture of methanol and ethanol is added to the discharge from the polymerization reactor at from -60 to 0°C in an amount such that a boron trifluoride-rich alcohol phase separates out,

b) the alcohol phase according to (a) is separated off and

c) the boron trifluoride of the alcohol phase according to (b) is, if desired, recycled to the process in a suitable manner.

**2.** A process as claimed in claim 1, wherein methanol is used in process step (a).

**3.** A process as claimed in claim 1 or 2, wherein the separating out of the boron trifluoride-rich alcohol phase in process step (a) as claimed in claim 1 is supported by adding water to the discharge from the polymerization reactor.

**4.** A process as claimed in any of claims 1 to 3 for the preparation of highly reactive polyisobutene having from 80 to 100 mol% of terminal double bonds.

**5.** A process as claimed in any of claims 1 to 4 for the preparation of highly reactive polyisobutenes having a number average molecular weight $M_n$ of from 200 to 50000 Dalton.

**6.** A process as claimed in any of claims 1 to 5, wherein a catalyst system which contains isopropanol is used for the cationic polymerization.

7. A process as claimed in any of claims 1 to 6, wherein a catalyst system which contains methanol is used for the cationic polymerization.

8. A process as claimed in claim 6 or 7, wherein a catalyst system which furthermore contains a dialkyl ether having at least one secondary alkyl group is used.

9. A process as claimed in any one of claims 1 to 8, wherein the deactivation and recovery of the boron trifluoride are carried out continuously.

10. A process as claimed in any one of claims 1 to 9, wherein the polymerization of the isobutene is carried out in the presence of from 20 to 5000 ppm of methyl tert-butyl ether, based on the weight of the reaction mixture.

11. A process as claimed in claim 10, in which the methyl tert-butyl ether is formed at least partially in the process.

12. A process as claimed in claim 10 or 11, wherein the methyl tert-butyl ether obtained in the discharge is separated from the discharge and is partially or fully recycled to the process.

## Revendications

1. Procédé de désactivation et de récupération de trifluorure de bore lors de la préparation de polyisobutènes par polymérisation cationique d'isobutène ou de courants d'hydrocarbures contenant de l'isobutène dans la phase liquide, en présence de trifluorure de bore en tant que tel ou sous forme d'un complexe catalytique à base de trifluorure de bore, dans lequel on isole le complexe catalytique du produit de sortie issu du réacteur sous la forme d'une phase essentiellement liquide, **caractérisé en ce que**

   a) on ajoute au produit de sortie issu du réacteur de polymérisation, à -60 jusqu'à 0°C, du méthanol, de l'éthanol ou un mélange de méthanol et d'éthanol, en une quantité telle qu'une phase alcoolique riche en trifluorure de bore se sépare, et
   b) on isole la phase alcoolique selon (a), et
   c) d'une manière appropriée, on recycle éventuellement dans le procédé le trifluorure de bore de la phase alcoolique selon (b).

2. Procédé suivant la revendication 1, **caractérisé en ce que**, dans l'étape (a) du procédé, on utilise du méthanol.

3. Procédé suivant la revendication 1 ou 2, **caractérisé en ce qu'**on aide la séparation de la phase alcoolique riche en trifluorure de bore dans l'étape (a) du procédé selon la revendication 1 par addition d'eau au produit de sortie issu du réacteur de polymérisation.

4. Procédé suivant les revendications 1 à 3, pour la préparation de polyisobutène hautement réactif comportant 80 à 100% molaires de doubles liaisons en fin de chaîne.

5. Procédé suivant les revendications 1 à 4, pour la préparation de polyisobutènes hautement réactifs présentant des moyennes numériques $M_n$ de 200 à 50.000 Daltons.

6. Procédé suivant les revendications 1 à 5, **caractérisé en ce que**, pour la polymérisation cationique, on met en oeuvre un système catalytique qui contient de l'isopropanol.

7. Procédé suivant les revendications 1 à 6, **caractérisé en ce que**, pour la polymérisation cationique, on met en oeuvre un système catalytique qui contient du méthanol.

8. Procédé suivant la revendication 6 ou 7, **caractérisé en ce qu'**on met en oeuvre un système catalytique qui contient de plus un éther dialkylique comportant au moins un groupe alkyle secondaire.

9. Procédé suivant les revendications 1 à 8, **caractérisé en ce qu'**on effectue la désactivation et la récupération du trifluorure de bore de manière continue.

10. Procédé suivant les revendications 1 à 9, **caractérisé en ce qu'**on effectue la polymérisation de l'isobutène en

présence de 20 à 5000 ppm d'éther méthyl-tert-butylique, par rapport au poids du mélange réactionnel.

**11.** Procédé suivant la revendication 10, dans lequel l'éther méthyl-tert-butylique est formé au moins partiellement dans le procédé.

**12.** Procédé suivant la revendication 10 ou 11, **caractérisé en ce qu'**on isole du produit de sortie l'éther méthyl-tert-butylique contenu dans celui-ci et **en ce qu'**on le recycle partiellement ou totalement dans le procédé.